# EUROPEAN PATENT APPLICATION

(11) **EP 2 228 730 A1**
(43) Date of publication of application: **15.09.2010**
(21) Application number: 09003477.8
(22) Date of filing: 10.03.2009
(51) Int. Cl.: G06F 13/40

(54) **Electronic device having external data transfer functionality**

(71) Applicant: ST-Ericsson SA, 1228 Plan-les-Ouates - Geneva (CH)
(72) Inventor: Roeber, Conrad, 90451 Nürnberg (DE); Walters, Eckhard, 90552 Roethenbach (DE)
(74) Representative: Klunker . Schmitt-Nilson . Hirsch

(57) **Abstract**

An electronic device (2), which has external data transfer functionality, comprises a first subsystem (4) and a second subsystem (28), each of the first and the second subsystem (4, 28) having an application processor (6, 30), and an intra-device network (46) coupling the first and the second subsystem (4, 28), with the first and the second subsystem (4, 28) each having an intra-device network access point (26, 44). The first subsystem (4) comprises an external data transfer port (22) for establishing a connection between the electronic device (2) and an external device. The first subsystem (4) further comprises a data routing unit (12) coupled to the external data transfer port (22), the data routing unit (12) being configured to route a data packet, received at the external data transfer port (22) and to be processed by the second subsystem (28), to the intra-device network access point (26) of the first subsystem (4) for a transmission to the second subsystem (28) over the intra-device network (46), thereby effecting external data transfer between the external device and the second subsystem (28) bypassing the application processor (6) of the first subsystem (4).

## Description

### Background of the Invention

### Field of the Invention

The present invention is directed to an electronic device having external data transfer functionality. In an exemplary application, the electronic device, such as a smart phone, provides at least one of multimedia and communication functionality.

### Description of the Related Art

Modern mobile phones commonly provide various different services to a user. These services include speech transmission, wireless e-mail and internet access, multimedia player functionality, such as that of an mp3 player, and video gaming. For many of these services, user data is loaded onto the mobile phone. Examples for this user data are mp3 files, video games and user-specific contact data to be used for e-mail or calling. Many modern mobile phones comprise an interface for connecting the mobile phone to another device, e.g. a PC, for transfer of said user data from the PC to the mobile phone. Upon reception of the user data at the mobile phone, the user data content is analysed in order to assign the user data to a particular service.

The development of modern mobile phones happens at a rapid pace. New services are constantly added and existing services are modified. However, for above discussed architecture, adding or modifying a service that is working with data loaded onto the mobile phone by a user is troublesome. New/modified services often rely on new kinds of user data. Hence, in addition to developing this new/modified service, the process of analysing the user data content and assigning the user data to a particular service, carried out upon reception of the data by the mobile phone, has to be adapted as well. Such an adaptation will ensure successful association of a new kind of user data to the new/modified service. This results in a time consuming development process when implementing new services into mobile phones.

Accordingly, it would be beneficial to provide increased ease of development for mobile phones, particularly to provide a more flexible external data transfer functionality for mobile phones.

### Summary of the Invention

According to a first aspect of the invention, an electronic device, which has external data transfer functionality, comprises a first subsystem and a second subsystem, each of the first and the second subsystem having an application processor, and an intra-device network coupling the first and the second subsystem, with the first and the second subsystem each having an intra-device network access point. The first subsystem comprises an external data transfer port for establishing a connection between the electronic device and an external device. The first subsystem further comprises a data routing unit coupled to the external data transfer port, the data routing unit being configured to route a data packet, received at the external data transfer port and to be processed by the second subsystem, to the intra-device network access point of the first subsystem for a transmission to the second subsystem over the intra-device network, thereby effecting external data transfer between the external device and the second subsystem bypassing the application processor of the first subsystem.

This electronic device allows for an efficient partitioning of the whole system into application-specific subsystems without causing a large processing overhead on the part of the subsystem comprising the external data transfer point. Application-specific subsystems are understood as subsystems having an application processor that carries out one or more particular applications, herein also referred to as services. The first reception point of external data, i.e. the first subsystem, is not required to process the content of every data packet received at the external data transfer port. On the contrary, received data packets are routed by the data routing unit to the particular subsystem in which the application is implemented for which the received data is intended. This has a number of advantages. The electronic device does not require any sort of processing unit that is able to analyse, interpret and process the application content of all data packets received. The respective application processors of the subsystems may be designed to only be able to interpret received data packets associated with the particular application(s) implemented in the respective subsystem. This allows for the design of more efficient application processors in the subsystems. Moreover, as a particular subsystem or a particular service/application is added or modified, the processing of the contents of received data packets may be altered or implemented in one particular subsystem, whereas the first subsystem comprising the external data transfer port may stay unchanged. Hence, an electronic device being comprised of a distributed system is provided, wherein individual components may be modified or replaced easily, particularly in the development process. The electronic device may be structured in manageable, separated subsystems, which may be easily integrated despite independent evolution speeds. Cheap and fast re-composability of functions to form target products that fit target markets is allowed for.

According to a second aspect of the invention, an electronic device, which has external data transfer functionality, comprises a first subsystem and a second subsystem, each of the first and the second subsystem having an application processor, and an intra-device network coupling the first and the second subsystem, with the first and the second subsystem having an intra-device network access point. The first subsystem comprises an external data transfer port for establishing a connection between the electronic device and an external device. The first subsystem further comprises a data routing unit coupled to the external data transfer port, the data routing unit being configured to route a data packet, received from the second subsystem via a transmission over the intra-device network and to be processed by the external device, to the external data transfer port, thereby effecting external data transfer between the external device and the second subsystem bypassing the application processor of the first subsystem.

The electronic device according to the second aspect of the invention provides many of the same advantages as the electronic device according to the first aspect of the present invention. The electronic device according to the second aspect of the present invention also allows for a partition of the system into application-specific subsystems. It eliminates the need for an external data transmission unit to interpret the content of application data received from a particular service and to be transferred to an external device. The application processors of the first and the second subsystem may submit data specific to an external data transfer related to a particular application to the data routing unit. In case of the second subsystem, said transmission is effected over the intra-device network. The data routing unit may then be reduced to buffering the data to be sent to the external device and to pass it to the external data transfer port at an appropriate time. It is, however, not required to interpret the application content of the data packets. Hence, the first subsystem, which comprises the external data transfer port, does not need to comprise functionality for being able to interpret application data specific to the application(s) of the second subsystem. Consequently, external data transfer capabilities from the second subsystem to the external device may be modified or added without the need to modifying the data routing capabilities in the first subsystem.

According to an embodiment of the invention, the data routing unit is configured to route a data packet, received at the external data transfer port and to be processed by the second subsystem, to the intra-device network access point of the first subsystem for a transmission to the second subsystem over the intra-device network, and is configured to route a data packet, received from the second subsystem via a transmission over the intra-device network and to be processed by the external device, to the external data transfer port, thereby effecting two-way external data transfer between the external device and the second subsystem bypassing the application processor of the first subsystem. Through this structure, an electronic device will benefit from above discussed advantages both when being the receiver of data from an external device as well as being the sender of data to an external device. A two-way communication between the electronic device and an external device may be established without the need for the subsystem of the electronic device comprising and controlling the external data transfer port being able to interpret the application content of all incoming and outgoing data.

According to another embodiment of the invention, the data routing unit comprises a plurality of data transfer points, each of the data transfer points being coupled to at least one of the group consisting of the application processor of the first subsystem and the intra-device network access point of the first subsystem. The data transfer points may be addressable by the external device. The plurality of data transfer points may be a plurality of hardware data transfer points, for example pins, individually accessible through the external data transfer port. As such, the external data transfer port may be seen by the external device as a plurality of subports, which can be individually addressed and can carry individual data traffic. In the data routing unit, a data transfer point may be coupled to the application processor of the first subsystem and/or to the intra-device network access point of the first subsystem in a hardware implemented manner, such as a hard-wired connection. In this way, the external device may send a data packet to be processed by the second subsystem to a pin which is coupled to the intra-device network access point of the first subsystem. On the other hand, the pin, from which the data packet is transmitted to the external device, indicates to the external device which subsystem the packet is coming from. Said functionality may as well be implemented in software with an identifier in the data packet indicating a virtual data transfer point. The data routing unit may evaluate said identifier for packets received from the external device and route the data packet to the application processor of the first subsystem and/or the intra-device network access point of the first subsystem for transmission to the second subsystem. For data packets stemming from one of the application processors and to be transferred to the external device, the data routing unit may add such an identifier to the data packet in order to indicate to the external device, which application the data packet is coming from. Accordingly, the provision of data transfer point in the data routing unit allows for an efficient routing of external data transfer between the electronic device and the external device. A routing of external transfer data to the intended application is ensured. It is also ensured that the origin of data from a particular application is indicated to an external device. Particularly efficient routing is provided, when the external device holds information about which data transfer points are coupled to which subsystems, the coupling to the second subsystem being effected over the intra-device network. Coupling in the sense of the application includes a direct connection between two entities as well as a connection being effected via intermediate entities.

According to a further embodiment, the data routing unit is configured to receive the data packet to be processed in the second subsystem on a data transfer point of the plurality of data transfer points that is coupled to the intra-device network access point of the first subsystem. This allows for an extremely efficient routing of data packets received from the external device, as the data routing unit routes the data packet merely on the basis the particular data transfer point, to which the data packet was transmitted by the external device.

It is pointed out that the electronic device according to any aspect of the invention may comprise more than two subsystems. The third, fourth, etc. subsystem may structurally be configured in an analogous way to the second subsystem, as far as the external data transfer functionality is concerned. These additional subsystems may each comprise intra-device network access points, such that the intra-device network connects all subsystems. The intra-device network may have a plurality of different configurations, as is well-known to a person skilled in the art. Examples are a ring bus topology, a star topology or a linear bus topology. Also, in a particular embodiment with more than two subsystems being present in the electronic device, only the first subsystem comprises an external data transfer port and a data routing unit. Hence, the principles regarding external data transfer discussed herein with regard to an electronic device having two subsystems may be extended to an electronic device having three or more subsystems.

### Brief Description of the Drawings

Embodiments of the invention are described in greater detail below with reference to the Figures, wherein:
- Figure 1: shows an electronic device in accordance with an embodiment of the present invention;
- Figure 2: shows an electronic device in accordance with another embodiment of the present invention;
- Figure 3: shows a system comprising a smart phone in accordance with an embodiment of the present invention and a PC connected to the smart phone; and
- Figure 4: shows a set-top box in accordance with an embodiment of the present invention connected to various periphery devices.

### Detailed Description of the Drawings

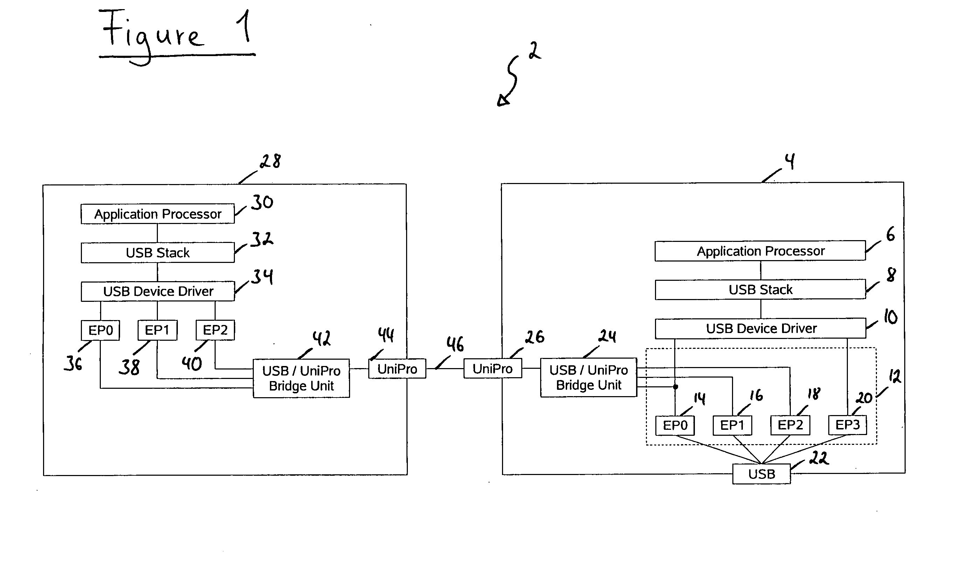

Figure 1 shows an electronic device 2 in accordance with an embodiment of the present invention. The electronic device 2 comprises a first subsystem 4 and a second subsystem 28. The first subsystem 4 comprises a USB port 22 and a data routing unit 12. The USB port 22 is coupled to the data routing unit 12, which comprises four endpoints 14, 16, 18 and 20, in Figure 1 also denoted EP0, EP1, EP2 and EP3. In particular, the USB port 22 is coupled to each of the four endpoints 14, 16, 18 and 20. The first subsystem 4 further comprises a USB device driver 10, to which endpoints EP0 and EP3 are coupled. The USB device driver 10 is further coupled to USB stack 8, which in turn is coupled to application processor 6, with USB stack 8 and application processor 6 also being included in first subsystem 4. The first subsystem 4 furthermore comprises a USB/UniPro bridge unit 24. The USB/UniPro bridge unit 24 is coupled to the three endpoints EP0, EP1 and EP2 of the data routing unit 12. The USB/UniPro bridge unit 24 is also coupled to UniPro port 26 comprised in first subsystem 4.

The second subsystem 28 comprises an application processor 30, a USB stack 32 and a USB device driver 34, with the application processor 30 being coupled to the USB stack 32 and the USB stack 32 being coupled to the USB device driver 34. The second subsystem 28 also comprises three endpoints 36, 38 and 40, also denoted EP0, EP1 and EP2 in Figure 1, each of the endpoints 36, 38 and 40 being coupled to the USB device driver 34. The second subsystem 28 also comprises USB/UniPro bridge unit 42, which is also coupled to all three endpoints 36, 38 and 40 of the second subsystem 28. The USB/UniPro bridge unit 42 is also coupled to UniPro port 44, also comprised in the second subsystem. The UniPro port 44 of the second subsystem 28 is connected to the UniPro port 26 of the first subsystem 4 through communication link 46, which is disposed outside of the two subsystems 4 and 28.

A general USB system has an asymmetric design, consisting of a USB host and one or more USB devices connected to the host in a star topology. The communication between the USB host and a USB device is based on logical channels, so called pipes. A pipe refers to a connection from the host to a logical entity on the device named endpoint. Each endpoint can transfer data in one direction only, either into or out off the device, so each pipe is uni-directional. In the following, the operation of the electronic device 2 is described, when the electronic device 2 acts as a USB device connected to a USB host (not shown).

Upon connection set-up between the USB host and the electronic device 2, the USB host gains knowledge about the endpoints present in electronic device 2 via a connection set-up protocol. As discussed above, USB endpoints are commonly logical entities. The endpoints 14, 16, 18 and 20 comprised in data routing unit 12 of the first subsystem 4 are hardware components in the exemplary embodiment of Figure 1, embodying the logical entities according to the USB standard. A USB data packet has a section identifying a USB endpoint. This identifier may serve as a basis for USB port 22 to direct the USB packet to the corresponding one of the endpoints 14, 16, 18 and 20 of the data routing unit 12. Alternatively, the USB port 22 may just pass on the USB data packet, with the data routing unit 12 comprising functionality to direct the USB data packet to the intended endpoint.

USB endpoints are commonly grouped into interfaces, with each interface being associated with a single device function. With respect to the embodiment of Figure 1, an exemplary interface may consist of the endpoints 16 and 18 of the data routing unit 12. USB defines class codes used to identify the functionality of a device. The exemplary interface related to the endpoints 16 and 18 of the data routing unit 12 may be an interface of the mass storage class, through which the USB host (not shown) may see the second subsystem 28 as a USB mass storage device. EP1 may be used for data transfer from the USB host to the second subsystem, whereas EP2 may be used for data transfer from the second subsystem to the USB host. According to normal USB operation, USB endpoint zero, which is embodied by EP0 of the data routing unit, is used for device configuration and is not associated with any interface.

The transfer of a USB data packet transferred from the USB host to the electronic device 2 is described in greater detail hereinafter. Assume that a data packet is transmitted from the USB host over the USB connection to USB port 22. Further assume that the USB data packet identifies the electronic device 2 as its target USB device and the endpoint EP1 as the target endpoint. This identifier is interpreted by USB port 22 and the USB data packet is passed on to endpoint 16 (EP1) in the data routing unit. It is pointed out that endpoint 16 may be a hardware entity, as shown in Figure 1, but it may also be a logical entity. In the data routing unit 12, the USB data packet is routed to USB / UniPro bridge unit 24 through the wired connection between endpoint 16 and the USB / UniPro bridge unit 24.

In the USB / UniPro bridge unit 24, the USB data packet is converted into a UniPro data packet. The Unified Protocol (UniPro) is a set of protocols that is loosely based on the Open Systems Interconnection (OSI) reference model, which comprises 7 layers. UniPro defines the layers 1 (physical layer) to 4 (transport layer). The USB data packet is embedded into a UniPro data packet frame, which then comprises the USB data packet and control data in accordance with the layers 1 through 4 of the UniPro protocol. The USB protocol may only comprise layers 1 (physical layer) and layer 2 (data link layer) as well as layers higher than layer 4, when described in terms of the OSI reference model. In such a case, the USB / UniPro bridge unit 24 may provide USB data link layer functionality and check the data integrity of the USB data packet, remove the redundancy associated with the data link layer and embed only the higher level data into the UniPro data packet. Alternatively, the USB data link layer functionality may be carried out in the second subsystem 28.

The UniPro data packet is then passed on to UniPro port 26, which acts as an access point to the communication link 46 connecting UniPro port 26 of the first subsystem 4 and UniPro port 44 of the second subsystem 28. The UniPro data packet is transmitted to UniPro port 44 of the second subsystem over communication link 46 and passed on to USB / UniPro bridge unit 42 of the second subsystem 28. In USB / UniPro bridge unit 42, the UniPro embedding of the USB data packet according to the UniPro protocol stack is reversed such that the USB data packet may be passed on to endpoint 38, in accordance with EP1 being identified in the USB data packet. USB device driver 34 receives the USB data packet from endpoint 38. USB device driver 34 is responsible for coordinating the data traffic between the USB stack 32 and the endpoints 36, 38 and 40. At USB stack 32, the application data is excerpted from the USB packet, i.e. the processing steps for the embedding of the application data according to the USB protocol stack are reversed, such that the application data may be passed on to the application processor 30 without containing any USB control information.

The reverse process, i.e. application data being transmitted from the application processor 30 of the second subsystem 28 to the USB host (not shown), will be described hereinafter. For example, upon request by the USB host for transferring particular data stored in the second subsystem 28, the application processor 30 of the second subsystem 28 creates a data set to be sent to the USB host. The application processor 30 passes said data set on to the USB stack 32. In the USB stack unit 32, the data set is processed according to the USB protocol stack. Depending on the size of the data set, one or more USB data packets may be created. A USB data packet contains application data of the data set and USB control information in accordance with the protocol layers of the USB standard. Such a USB data packet is then passed on to the USB device driver 34 of the second subsystem 28. In accordance with the exemplary definition of the USB mass storage interface above, the USB data packet is passed on to endpoint 40, i.e. EP2, which is the endpoint for transmission from the second subsystem to the USB host. The USB data packet is passed on to the USB / UniPro bridge unit 42 of the second subsystem 28, converted into a UniPro data packet in a analogous manner as described above, transferred to the USB / UniPro bridge unit 24 of the first subsystem 4 over the UniPro port 44, the communication link 46 and the UniPro port 26, and re-converted into a USB data packet in the USB / UniPro bridge unit 24 of the first subsystem 4. According to its endpoint identifier, the USB data packet is then passed on to the endpoint 18, i.e. EP2, of the data routing unit 12. Endpoint 18 comprises a USB data packet buffer, where the USB data packet is temporarily stored. When the USB host polls EP2 of the USB port 22, the data packet is read out of the USB data packet buffer and transmitted to the USB host over the USB connection.

When the USB host intends to send a USB data packet to the application processor 6 of the first subsystem 4, it identifies EP3, i.e. endpoint 20, as the target endpoint of the USB device, i.e. of the electronic device 2. The data packet is transferred to the application processor 6 of the first subsystem 4 via the USB port 22, the data routing unit 12, in particular the endpoint 20, the USB device driver 10, and the USB stack unit 8. The processing of the USB data packet in the USB device driver 10 of the first subsystem 4 and the USB stack 8 of the first subsystem 4 is carried out in an analogous manner as described above with respect to the USB device driver 34 of the second subsystem 28 and the USB stack 32 of the second subsystem 28. As no data transfer between the first subsystem 4 and the second subsystem 28 is carried out, no intermediate conversion of the USB data packet into a UniPro data packet and back into a USB data packet takes place.

Endpoint 14 of the data routing unit, i.e. EP0, is addressed by the USB host when USB device control signals are transferred to the electronic device 2. These control signals are routed to both the USB device driver 10 of the first subsystem as well as to the USB device driver 34 of the second subsystem via above discussed data transmission path. Hence, both USB device drivers are made aware of configuration information, such as connection set-up information. Configuration information may be transferred in a bi-directional manner through endpoint 14, i.e. EP0.

As can be seen from above description regarding Figure 1, the USB device driver 34 transmits and receives USB data packets through and from the endpoints 36, 38 and 40 in the same manner as USB device driver 10 transmits and receives USB Data packets through and from endpoints 14 and 20. The intermediate packet conversion into UniPro data packets does not affect the functionality of the USB device driver 34 of the second subsystem 28. Therefore, standard USB device software may be run on the application processor 30 or somewhere else in the second subsystem 28 for controlling the USB stack unit 32 and the USB device driver 34. Also, in the first subsystem 4, standard USB software may be run on application processor 6 or somewhere else in the first subsystem 4 for controlling the USB stack unit 8 and the USB device driver 10.

As is apparent, this architecture allows for modifying or replacing an application processor of any of the subsystems without the need for system architecture changes throughout the rest of the electronic device 2. In the development of an electronic device, a new service may be implemented to be provided to a user, wherein the new service might require modified external data transfer capabilities, for example new USB classes being included in the data transfer capabilities of the electronic device. As an example, if it is determined that a new application is implemented in the second subsystem 28, an accordingly modified application processor 30 of the second subsystem 28 may be developed. However, even if that new application requires a new sort of external data transfer, the whole first subsystem 4 as well as the data processing blocks associated with external data transfer in the second subsystem 28 may be left unchanged. Consequently, an increased re-usability of components in the development of electronic devices is achieved. Cheap and fast re-composability of functions to form target products that fit target markets is achieved, which is beneficial given the growing divergence of market segments and customer base as well as the difference in life cycles of functional subsystems.

There are a number of alternatives for configuring the data routing unit 12. The endpoints 14, 16, 18 and 20 may be hardware entities, as described above, and may comprise data packet buffers. A USB data packet received at USB port 22 may be passed on to a particular endpoint depending on the endpoint identified in the USB data packet. The data packet may be temporarily stored in a particular endpoint or passed on to either the USB device driver 10 of the first subsystem 4 or to the USB / UniPro bridge unit 24 of the first subsystem immediately. On the other hand, a data packet received from the USB / UniPro bridge unit 24 or the USB device driver 10 may be buffered until the particular endpoint is polled by the USB host, with the USB data packet being sent to the USB host following the polling event. However, it is also possible to design the data routing unit 12 without hardware endpoints. The endpoints EP0, EP1, EP2 and EP3 may be logical entities addressable via an identifier in the USB data packet. The data routing unit may interpret the identifier and route a USB data packet received at the USB port 22 to the USB device driver 10 and/or to the USB / UniPro bridge unit 24 depending on the subsystem(s) a particular endpoint is associated with. For USB data packets received by the data routing unit 12 from the USB device driver 10 or the USB / UniPro bridge unit 24, the data routing unit may store these USB data packets in a common memory and access that memory upon polling of a particular endpoint by the USB host. A combination of these two alternatives is also possible. The endpoints may be logical entities for USB data packets received at the USB port 22, whereas buffers are present for every endpoint for temporarily storing USB data packets to be transferred to the USB host. These buffers allow for extremely short reaction times to the polling by the USB host.

The decision for a particular architecture of the data routing unit may be linked to the Quality of Service (QoS) requirements of the external data transfer. The data integrity of USB packets is commonly protected by Cyclic Redundancy Checks (CRC) to allow for error detection, whereas error correction is optional. The USB standard offers several levels of QoS to applications. Among them are "Bulk", having no guarantee of bandwidth and providing error correction, "Interrupt", having a guaranteed bandwidth and providing error correction, and "Isochronous", having a guaranteed bandwidth, but not providing error correction. As a design goal may be to provide a certain QoS level for a data transfer between the external device and the application processor 6 of the first subsystem 4 as well as for a data transfer between the external device and the application processor 30 of the second subsystem 28, the processing times in the data routing unit 12, the USB / UniPor bridge units 24 and 42 as well as the transmission time over the communication link 46 may be taken into account. UniPro allows for high speed data transmission and is therefore suitable for supporting at least the majority, if not all USB QoS levels.

In this context, the endpoints 14, 16, 18 and 20 may be configured to have buffers of substantial size to allow for flexibility in passing on USB data packets. For example, a particular endpoint may be used for a data transfer between the application processor 30 of the second subsystem 28 and the external device, with the data transfer having strict latency requirements. In such a case, the USB data packets associated with that data transfer may be transmitted to/from the second subsystem with a higher priority, which may lead to other USB data packets being buffered in another endpoint for a comparably longer period of time.

However, such re-ordering of the USB data packets according to their QoS priority may not be desirable in some embodiments. Particularly, USB data packets on different endpoints may be related. For example, a control signal on EP0 may be a request to clear a stall condition of another endpoint. The next USB packet to the latter endpoint may be intended to find an unstalled endpoint. Hence, preserving the order of USB packets before transfer over the communication link 46 may be desirable, such that said relation between USB data packets intended for different endpoints is preserved until their processing in the second subsystem 28. Hence, the subsystems of the embodiment of Figure 1 are provided with one UniPro port, such that the USB data packet order is more easily preserved in the case of transmission of a plurality of data packets over the communication link 46 and through the USB / UniPro bridge units 24 and 42. It is also possible, however, to provide multiple communication links between the first subsystem 4 and the second subsystem 28.

The communication link 46 between the first subsystem 4 and the second subsystem 28 is the simplest form of an intra-device network, with the UniPro ports 26 and 44 being intra-device network access points. Particularly in the case of the electronic device 2 comprising a greater number of subsystems, an intra-device network may have a wide variety of different configurations. The individual subsystems may be coupled to each other by a ring-shaped, a star-shaped or a linear bus-shaped network, to just name a few. The intra-device network allows data transfer from an arbitrary intra-device network access point to all other subsystems having intra-device network access points, irrespective of the particular design. The intra-device network may be used exclusively for enabling all subsystems to effect data transfer via an external data transfer port contained in one particular subsystem. However, it may also be used for further data exchange between the individual subsystems, thereby acting as an integrated intra-device network.

It is further pointed out that the USB device driver 10 controlling the physical USB port 22 may have additional functionality as compared to the USB device driver 34 of the second subsystem relating to the USB port indirectly through the intra-device network. The "physical" USB device driver 10 may detect a number of status changes at the USB link, such as attachment to a USB host, detachment from a USB host, link reset, suspend and resume. When the USB device driver 10 detects such a status change, a message containing the status change is broadcast to all other USB device drivers, in the exemplary embodiment of Figure 1 to the USB device driver 34 of the second subsystem 28. Such a message may be generated by the USB device driver 10 and and passed on to the USB / UniPro bridge unit 24 for transfer to the USB device driver 34. Alternatively, such a message may be generated and transmitted by the USB / UniPro bridge unit upon request by the USB device driver 10.

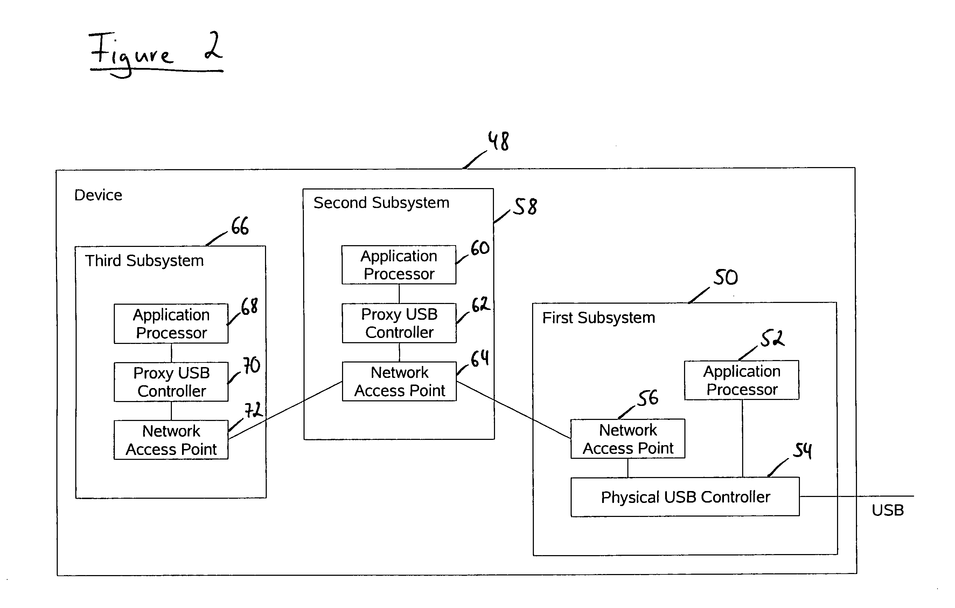

Reference is now made to Figure 2, which shows an electronic device 48 in accordance with another embodiment of the present invention. The electronic device 48 comprises a first subsystem 50, a second subsystem 58 and a third subsystem 66. The first subsystem comprises a USB port.

The subsystems themselves are depicted in a less detailed, more general manner than the subsystems of the electronic device 2 of Figure 1.

The first subsystem 50 of the electronic device 48 comprises an application processor 52, a physical USB controller 54 and a network access point 56. The physical USB controller 54 is coupled to the USB port, the application processor 52 and the network access point 56. The second subsystem comprises an application processor 60, a proxy USB controller 62 and a network access point 64. The proxy USB controller 62 is coupled to the application processor 60 and the network access point 64. The third subsystem 66 comprises an application processor 68, a proxy USB controller 70 and a network access point 72. The proxy USB controller 70 is coupled to the application processor 68 and the network access point 72. The network access point 56 of the first subsystem 50 is coupled to the network access point 64 of the second subsystem 58 via a first communication link. The network access point 64 of the second subsystem 58 is coupled to the network access point 72 of the third subsystem 66 via a second communication link. The first communication link and the second communication link form an intra-device network of the electronic device 48.

It is pointed out that the operation of the electronic device 48 is in one operation regime analogous to the operation of the electronic device 2 discussed in connection with Figure 1. As is apparent from Figure 2, in the electronic device 48, three subsystems have access to the USB port and may carry out external data transfer to/from an external device (not shown). In that respect, the electronic device 48 has extended functionality over the electronic device 2 depicted in Figure 1. The data routing unit 12, the USB device driver 10 and the USB stack 8 of the first subsystem 4 of the electronic device 2 may be seen as a particular embodiment of the physical USB controller 54 of the first subsystem 50 of the electronic device 48. Also, the USB / UniPro bridge unit 24 and the UniPro port 26 of the first subsystem 4 of the electronic device 2 may be seen as a particular embodiment of the network access point 56 of the first subsystem 50 of the electronic device 48. Analogously, the USB / UniPro bridge unit 42 and the UniPro port 44 may be seen as a particular embodiment of the network access points 64 and 72, respectively. Also analogously, the endpoints 36, 38 and 40, the USB device driver 34 and the USB stack 32 may be seen as a particular embodiment of the proxy USB controllers 62 and 70, respectively. The term proxy USB controller refers to a USB controller that is not directly coupled to a physical USB port, but is controllable by a processor as if it were coupled to a physical USB port.

According to an embodiment of the invention, the electronic device may be operated in a further operation regime, which will be described hereinafter with respect to the electronic device 48 shown in Figure 2. In the On-The-Go extension of the USB specification, the roles of the connected devices - USB host and USB device - may change. A dual-role device may act as either USB host or USB device. If two dual-role devices are connected to each other, they mutually agree on the USB host and USB device roles. At a given time, a dual-role device has either the USB host role or the USB device role. The role may initially be determined by the voltage level at the ID in of the USB port and may subsequently be re-negotiated by the two devices using the Host Negotiation Protocol (HNP).

The electronic system 48 of Figure 2 may be configured as a dual-role device. The physical USB controller 54 may act as a USB host controller, when the electronic device 48 is connected to an external USB device or to an external dual-role device, with the two devices agreeing on the electronic device 48 being the USB host. A USB host software may be run on the physical USB controller 54 or the application processor 52 or a combination thereof. The USB host software not only exchanges user data with the attached USB device, but also manages that USB device as a whole; for instance, it resets it, assigns an address, etc. The USB host software usually assumes that it has exclusive control over the USB host controller and thus the USB device, i.e. the external device connected to the USB port in this exemplary configuration. For this reason, there may be only one subsystem acting as a USB host, which is the first subsystem 50 in the exemplary embodiment discussed. In a dual-role device, only one subsystem may manage the role negotiation.

This centralization of typical USB host tasks in the first subsystem 50 does not interfere with the general concept of routing USB data packets to and from the second and third subsystem 58, 66 without analysing the application data content in the first subsystem. The USB data packets originating from or intended for the second or third subsystem still bypass the application processor 52 of the first subsystem 50.

The physical USB controller 54 does not necessarily carry out the USB host control. One of the proxy USB controllers 62 and 70 of the second and third subsystem 58 and 66 may act as a USB host controller. In a further embodiment, the proxy USB controller 70 of the third subsystem 66 holds the USB host control. However, events like the attachment of a USB device are passively detected by the physical USB controller 54 only. Accordingly, a protocol for exchange of status indication messages between the physical USB controller 54 and the proxy USB controller 70 may be implemented. When the physical USB controller 54 detects a status change like an attached device, it notifies the proxy USB controller 70 of the status change via the intra-device network. On the other hand, when the proxy USB controller 70 wants to actively initiate a status change of the attached USB device, such as reset, suspend or resume the USB device, it does so by sending a message via the intra-device network to the physical USB controller 54. For the role switching of dual-role devices in such a case, status indications or requests may be coded as messages and exchanged between the physical USB controller 54 and the proxy USB controller 70 of the third subsystem 66 via the intra-device network.

In above discussed embodiment, wherein the electronic device 48 is a USB dual-role device, the USB host control software in the proxy USB controllers 62 and 70 may be split into software dealing with data transfers and software that manages the proxy USB controller and the attached USB device(s). This may increase the performance and decomposability of the proxy USB controller. There may be any number of instances of the data transfer software.

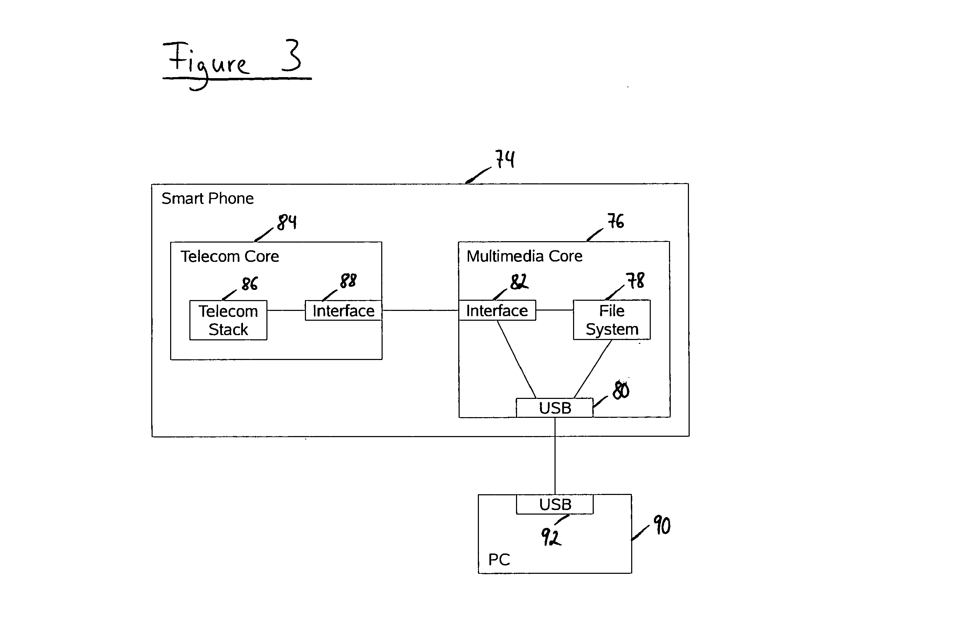

Reference is now made to Figure 3, which shows a smart phone 74 in accordance with an embodiment of the invention. The term smart phone refers to a mobile phone that provides additional functionality, such as media player functionality, to a user. The smart phone 74 comprises two subsystems, namely a multimedia core 76 and a telecom core 84. Each subsystem provides a certain functionality, also referred to as a particular service or application, to a user.

The telecom core 84 allows the smart phone to establish communication to other telecommunication participants, particularly in a wireless communication manner. The telecom stack 86 is an application processor providing the particular application(s) related to wireless communication. The multimedia core 76 allows the user to use the smart phone as a multimedia device, particularly as a media player, such as an mp3 player or a video player. The unit referred to as file system 78 comprises an application processor for carrying out that functionality as well as a memory for storing the multimedia files.

The multimedia core 76 is the first subsystem in the sense of the invention, whereas the telecom core 84 is the second subsystem in the sense of the invention. The subsystems 76 and 84 are depicted in a simplified manner.

The multimedia core 76 comprises a USB unit 80, with the USB unit 80 comprising a USB port and a physical USB controller. In particular, the USB unit comprises a data routing unit. The USB unit 80 is coupled to the file system unit 78 as well as to interface 82, which is the intra-device network access point of the multimedia core 76. The interface may comprise a bridge unit for conversion of USB data packets into a data packet format used for transmission over the intra-device network. The file system 78 and the interface 82 are also coupled.

The telecom stack 86 of the telecom core 84 is coupled to interface 88 of the telecom core 84. The interface 88 is the intra-device network access point of the telecom core 84 and may comprise a bridge unit for conversion of USB data packets into a data packet format used for transmission over the intra-device network. The telecom stack 86 may comprise a proxy USB controller.

The smart phone 74 is coupled to a PC 90 via a USB connection, with the USB unit 80 of the smart phone being coupled to a USB unit 92 of the PC.

Data transfer between the PC 90 and the smart phone 74 may be effected as follows. The PC 90 may act as a USB host, whereas the smart phone 74 may act as a USB device. Having knowledge about the USB endpoints in the USB unit 80 of the smart phone 74 through the USB protocol, the PC 90 may establish data exchange with the file system 78 via USB unit 92 and USB unit 80. On the other hand, the PC 90 may establish data exchange with the telecom stack 86 via USB unit 92, USB unit 80, interface 82, the intra-device network and interface 88. The file system 78 and the telecom stack 86 are therefore individually addressable by the PC.

Examples of data transfer may be a loading of an mp3 file from the PC 90 onto the multimedia core 76, a transfer of a software update for the telecom stack 86 from the PC 90 to the telecom stack 86 or a transfer of contact data for calling purposes from the PC 90 to the telecom stack 86.

It is pointed out that the file system 78 is coupled to the interface 82, such that a data exchange between the file system 78 and the telecom stack 86 via the intra-device network is possible.

The smart phone 74 may be configured as a USB dual-role device, i.e. it may act as a USB host as well. Instead of being connected to the PC 90, the smart phone 74 may for example be connected to a headset, i.e. a USB device consisting of headphones and a microphone. A headset is usually a USB device in the sense of the USB standard. The smart phone 74 may then act as the USB host. The headset may be used for talking over the phone using the wireless communication capabilities of the telecom core 84. The audio data may then be exchanged in a two-way manner between the headset and the telecom core 84, wherein the data flow is effected bypassing the application processor of the multimedia core 76, even though the USB unit 80 is contained in the multimedia core 76.

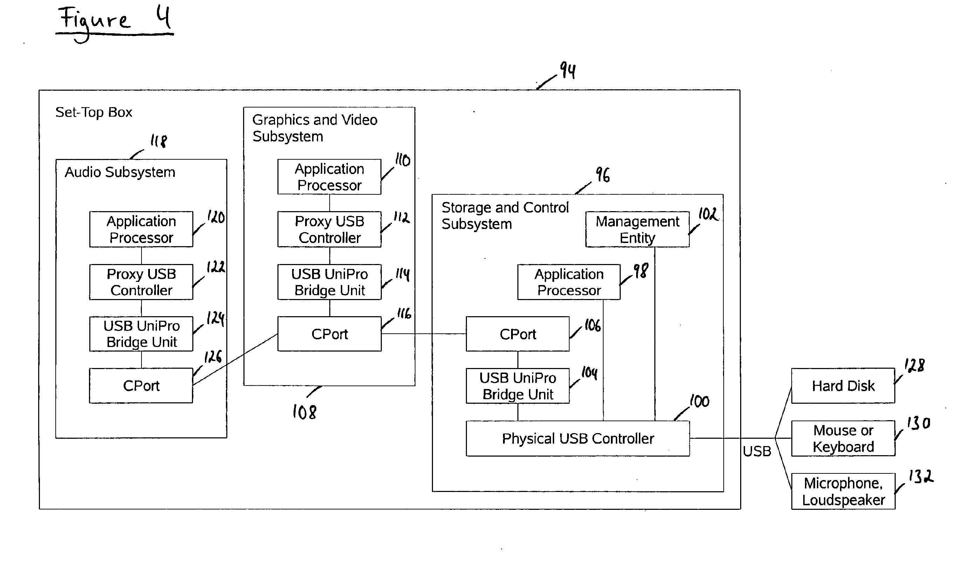

Reference is now made to Figure 4, which shows a set-top box 94 in accordance with an embodiment of the invention. A set-top box is commonly understood as a device that connects to a television and an external source of signal, turning the signal into content which is then displayed on the television screen. The architecture of the set-top box 94 is very similar to the electronic device 48 of Figure 2. A detailed description of all components of the set-top box 94 is therefore omitted for brevity. The network access points were shown as one unit, respectively, in Figure 2, with protocol bridge functionality embedded in the network access points. In Figure 4, the network access points are CPorts 106, 116 and 126, which are access points to communication networks in accordance with the UniPro protocol. The USB UniPro bridge units 104, 114 and 124 are depicted as separate entities, their functionality having been described with respect to Figure 1.

The set-top box 94 comprises three subsystems, a storage and control subsystem 96, a graphics and video subsystem 108 and an audio subsystem 118. The storage and control subsystem is the first subsystem in the sense of the invention, comprising a USB port and a physical USB controller 100. The storage and control subsystem 96 also comprises a management entity 102 coupled to the physical USB controller 100, which manages the USB connections through the physical USB controller 100. Alternatively, the application processor 98 and the management entity 102 of the storage and control subsystem 96 may be coupled to the CPort 106, such that the communication of these entities with the physical USB controller 100 is effected through the CPort 106 and the USB UniPro bridge unit 104.

The set-top box 94 may be configured to be a USB dual-role device or to be a USB host device. In both cases, the set-top box 94 may act as a USB host to USB devices connected via its USB port.

In the exemplary embodiment of Figure 4, the set-top box may be connected to one or more of a hard disk 128, a mouse or keyboard 130 and a microphone and/or loudspeaker 132. The hard disk 128 may be logically linked to the storage and control subsystem 96. The mouse or keyboard 130 may be logically linked to the graphics and video subsystem 108 and may be used for menu navigation and character input. The audio devices like microphones or loudspeakers 132 may be logically linked to the audio subsystem 118 and may be used for sound playback or recording of an audio track. A data routing unit comprised in the storage and control subsystem 96 is configured to route USB data packets to/from the external USB devices 128, 130 and 132. USB data packets associated with a particular application / service are transferred to the subsystem implementing the according application / service, without their contents being analysed in the storage and control subsystem, which comprises the USB port.

In a further embodiment of the invention, the data routing unit is configured to effect the routing of the data packet in disregard of an application content of the data packet. As a data packet, which is part of an external data transfer to/from the second subsystem, is neither analysed in the application processor of the first subsystem nor in the data routing unit in terms of its application content, it is ensured that the processing burden for external data transfer for the first subsystem, which comprises the external data transfer port, is kept to a minimum. Hence, a more rigorous application-specific design of the individual subsystems is rendered possible.

According to a further embodiment of the invention, the transmission of the data packet over the intra-device network is in operation effected in disregard of an application content of the data packet. Through this configuration, it is achieved that an end-to-end connection between the external device and the second subsystem, which carries out a particular application, is established, the end-to-end connection allowing transfer of application data without any intermediate interpretation of the application data. This allows for fast data transfer times, efficient routing and low processing burden in the first subsystem and the intra-device network, particularly the intra-device network access points of the first and second subsystem.

In accordance with a further embodiment of the invention, the transmission of the data packet over the intra-device network is in operation effected with a transport layer communication protocol. A transport layer communication protocol is herein understood as a communication protocol whose highest layer is at most the transport layer, i.e. the fourth layer, when the communication protocol is described with reference to the seven layer model standardized as the Open Systems Interconnection (OSI) reference model. This ensures that only a minimum amount of processing of the data packets is carried out in order to transmit the data packet between the first subsystem and the second subsystem over the intra-device network.

In a further embodiment of the invention, the transmission of the data packet over the intra-device network is in accordance with the UniPro communication protocol. Effecting transmission over the intra-device network via UniPro allows for an integrated intra-device network, because the network can additionally be used for further communication between the subsystems that is not related to the external data transfer functionality. Such further communication functionality may be implemented via UniPro as well. Intra-device network access points may be implemented as CPorts in accordance with the UniPro standard.

According to a further embodiment of the present invention, the external data transfer port of the first subsystem is a USB port. The external data transfer port being a Universal Serial Bus (USB) port allows for connecting the electronic device with a wide variety of external devices, because means for USB connectivity are common place in all sorts of devices that could be used as external devices in the sense of the invention. The external data transfer port may also be an infrared interface, a bluetooth interface, a WLAN interface, a wireless USB interface or any other interface suitable for carrying out the invention.

In another embodiment of the invention, the data routing unit comprises a plurality of data transfer points, each of the data transfer points being coupled to at least one of the group consisting of the application processor of the first subsystem and the intra-device network access point of the first subsystem, wherein the plurality of data transfer points of the data routing unit are endpoints in accordance with the USB standard. According to the USB standard, an endpoint is a logical entity on a USB device, the endpoint being associated with a logical communication channel, also referred to as pipe. Commonly, an endpoint may transfer data in one direction only, either into or out of the device, so each pipe is uni-directional. An endpoint is understood as a uniquely addressable portion that is the source of sink of information in a communication flow between the USB host and the USB device. This embodiment allows for the advantages discussed above in connection with having data transfer points in place in the data routing unit combined with the advantage of having the electronic device be in conformity with the USB standard. Consequently, the external device sees the electronic device as a standard USB device having a plurality of endpoints. As these endpoints are data transfer points, which in turn are coupled to the application processors of the first subsystem and/or the second subsystem, the external device may directly send application data to the intended application processor. On the other hand, the external device may deduce from the particular endpoint, at which data is provided by the electronic device for external data transfer, from which application processor that particular data originally comes. Therefore, external data transfer between the application processors of the first and second subsystems with the external device is effected with extremely little processing overhead in the data routing unit.

According to a further embodiment, each endpoint may be associated with a particular USB device class, which allows for a very structured routing of different USB transfer functionality. A mechanism for distributing USB classes across the intra-device network and therefore across the individual subsystems is provided therewith. The data routing unit may comprise a routing function that is aware which classes are realized in the first subsystem and which classes are realized in the second subsystem. The routing may then be based on that information.

In another embodiment of the invention, the second subsystem comprises a USB driver coupled between the application processor of the second subsystem and the intra-device network access point of the second subsystem. The coupling is not necessarily a direct coupling, it only requires a connection path. Further entities may be disposed between the USB driver and the application processor as well as between the USB driver and the intra-device network access point. This structure allows for using standard USB software in the application processor of the second subsystem for effecting external data transfer to and from the external device, which allows for an easy implementation and development of data transfer functionality in the application processor of the second subsystem. Despite the protocol conversion carried out for transmission of the data over the intra-device network and the routing of the data in the data routing unit of the first subsystem to the according endpoint of the USB port, only standard USB functionality is implemented in the application processor of the second subsystem, as if said subsystem were directly connected to a USB port.

According to a further embodiment, the first subsystem comprises a first protocol bridge unit coupled between the data routing unit and the intra-device network access point of the first subsystem and the second subsystem comprises a second protocol bridge coupled between the intra-device network access point of the second subsystem and the application processor of the second subsystem. In another embodiment, the protocol bridge unit may be included in the respective intra-device network access point. In the first protocol bridge unit, data packets are converted between the protocol used for a transfer between the external device and the external data transfer port as well as for routing and the protocol used for transmission over the intra-device network. In the second protocol bridge unit, a reverse conversion may be carried out such that a USB port equivalent is seen by the application processor of the second subsystem. Accordingly, the interaction of the application processor of the second subsystem with the external device for external data transfer is decoupled from the intermediate transmission over the intra-device network and the routing in the data routing unit. In a particular embodiment, the first and second protocol bridge units are USB UniPro bridge units.

In a further embodiment, the electronic device is configured to be connectible to an external device acting in operation as a USB host according to the USB standard, with the electronic device acting as a USB device according to the USB standard. As such a USB device having a plurality of endpoints, the electronic device may be connected to a wide variety of external devices, for example a PC, which may interact with the electronic device without any specific adaptations.

In another embodiment, the electronic device is configured to be connectible to an external device acting in operation as a USB device according to the USB standard, with the electronic device acting as a USB host according to the USB standard. This allows for the electronic device to be connected to external devices that commonly act as USB devices in accordance with the USB standard, such as USB headphones. Accordingly, the application processor of the second subsystem is able to communicate with an external USB device and use its functionality for additional services to the user without imposing a large computational load on the first subsystem, which comprises the USB port. In accordance with the On-The-Go extension to the USB specification, the electronic device may be a dual-role device, meaning that the electronic device may act as either a USB host or as a USB device. In case the electronic device, being configured as a dual-role device, is connected to a second dual-role device, the roles of the two devices, i.e. the USB host role and the USB device role, are set in accordance with a role negotiation protocol.

The present invention may be applied to various electronic devices, particularly multimedia and communication devices. Examples are mobile phones, PDAs, media players and set-top boxes. It can also be applied to measuring equipment and other electronic devices. In particular, it may be applied to hand held or portable electronic devices, such as mobile phones, PDAs, portable media players, hand held measuring equipment, etc. In general terms, the invention may be applied to any electronic device, for which structured external data transfer may be advantageous.

## Claims

1. Electronic device (2) having external data transfer functionality, comprising:
a first subsystem (4) and a second subsystem (28), each of the first and the second subsystem (4, 28) having an application processor (6, 30), and
an intra-device network (46) coupling the first and the second subsystem (4, 28), with the first and the second subsystem (4, 28) each having an intra-device network access point (26, 44),
wherein the first subsystem (4) comprises an external data transfer port (22) for establishing a connection between the electronic device (2) and an external device,
wherein the first subsystem (4) further comprises a data routing unit (12) coupled to the external data transfer port (22), the data routing unit (12) being configured to route a data packet, received at the external data transfer port (22) and to be processed by the second subsystem (28), to the intra-device network access point (26) of the first subsystem (4) for a transmission to the second subsystem (28) over the intra-device network (46), thereby effecting external data transfer between the external device and the second subsystem (28) bypassing the application processor (6) of the first subsystem (4).

2. Electronic device (2) having external data transfer functionality, comprising:
a first subsystem (4) and a second subsystem (28), each of the first and the second subsystem (4, 28) having an application processor (6, 30), and
an intra-device network (46) coupling the first and the second subsystem (4, 28), with the first and the second subsystem (4, 28) each having an intra-device network access point (26, 44),
wherein the first subsystem (4) comprises an external data transfer port (22) for establishing a connection between the electronic device (2) and an external device,
wherein the first subsystem (4) further comprises a data routing unit (12) coupled to the external data transfer port (22), the data routing unit (12) being configured to route a data packet, received from the second subsystem (28) via a transmission over the intra-device network (46) and to be processed by the external device, to the external data transfer port (22), thereby effecting external data transfer between the external device and the second subsystem (28) bypassing the application processor (6) of the first subsystem (4).

3. Electronic device (2) according to claim 1 or 2, wherein the data routing unit (12) comprises a plurality of data transfer points (14, 16, 18, 20), each of the data transfer points (14, 16, 18, 20) being coupled to at least one of the group consisting of the application processor (6) of the first subsystem (4) and the intra-device network access point (26) of the first subsystem (4).

4. Electronic device (2) according to claim 3, wherein the data routing unit (12) is configured to receive the data packet to be processed in the second subsystem (28) on a data transfer point of the plurality of data transfer points (14, 16, 18, 20) that is coupled to the intra-device network access point (26) of the first subsystem (4).

5. Electronic device (2) according to any of the previous claims, wherein the data routing unit (12) is configured to effect said routing of the data packet in disregard of an application content of the data packet.

6. Electronic device (2) according to any of the previous claims, wherein said transmission of the data packet over the intra-device network (46) is in operation effected in disregard of an application content of the data packet.

7. Electronic device (2) according to any of the previous claims, wherein said transmission of the data packet over the intra-device network (46) is in operation effected with a transport layer communication protocol.

8. Electronic device (2) according to any of the previous claims, wherein said transmission of the data packet over the intra-device network (46) is in accordance with the UniPro communication protocol.

9. Electronic device (2) according to any of the previous claims, wherein the external data transfer port (22) of the first subsystem (4) is a USB port.

10. Electronic device (2) according to claim 9, wherein the data routing unit (12) comprises a plurality of data transfer points (14, 16, 18, 20), each of the data transfer points (14, 16, 18, 20) being coupled to at least one of the group consisting of the application processor (6) of the first subsystem (4) and the intra-device network access point (26) of the first subsystem (4),
wherein the plurality of data transfer points (14, 16, 18, 20) of the data routing unit (12) are endpoints in accordance with the USB standard.

11. Electronic device (2) according to claim 9 or 10, wherein the second subsystem (28) comprises a USB driver (34) coupled between the application processor (30) of the second subsystem (28) and the intra-device network access point (44) of the second subsystem (28).

12. Electronic device (2) according to any of the previous claims, wherein the first subsystem (4) comprises a first protocol bridge unit (24) coupled between the data routing unit (12) and the intra-device network access point (26) of the first subsystem (4) and the second subsystem (28) comprises a second protocol bridge unit (42) coupled between the intra-device network access point (44) of the second subsystem (28) and the application processor (30) of the second subsystem (28).

13. Electronic device (2) according to claim 12, wherein the first and second protocol bridge units (24, 42) are USB UniPro bridge units.

14. Electronic device (2) according to any of the claims 9 to 13, configured to be connectable to an external device acting in operation as a USB host according to the USB standard, with the electronic device (2) acting as a USB device according to the USB standard.

15. Electronic device (2) according to any of the claims 9 to 14, configured to be connectable to an external device acting in operation as a USB device according to the USB standard, with the electronic device (2) acting as a USB host according to the USB standard.
